# EUROPEAN PATENT APPLICATION

(11) **EP 4 811 303 A1**
(43) Date of publication of application: **23.09.2026**
(21) Application number: 25305408.4
(22) Date of filing: 21.03.2025
(51) Int. Cl.: G06V 10/82

(54) **RESOURCE CONSTRAINED OBJECT DETECTION**

(71) Applicant: NXP B.V., 5656 AG Eindhoven (NL)
(72) Inventor: Bahl, Gaetan, 06130 Grasse (FR)
(74) Representative: Schwarzweller, Thomas

(57) **Abstract**

A computer implemented method of detecting one or more objects in an image. The method comprises processing a strip of the image, the strip comprising S lines of pixels of the image, with a backbone model to extract backbone features. The backbone features are processed with a neck model to enhance and/or fuse the backbone features and thereby produce neck features. The neck features are processed with a head model to detect one or more objects in the image. The step of processing a strip of the image is repeated until the whole image is processed.

## Description

### Field

The disclosure relates to a computer implemented method for object detection and to a system configured to perform the method.

### Background

It is useful to identify objects in images, for example in one or more frames of a video. This can be useful in many contexts, including: security and surveillance, autonomous vehicles, retail and inventory management, healthcare and medical imaging, agriculture, traffic management and smart cities, wildlife monitoring and conservation, augmented reality, and gaming.

It is possible to detect objects in images using machine learning. Object detection algorithms in machine learning comprise trained neural networks (such as convolutional neural networks). Examples of current architectures that are used in object detection are SSD and YOLO.

Some computing systems are resource constrained. For example, embedded systems such as microcontrollers often have limited amounts of memory, which may make it impossible to perform existing object detection methods (e.g. SSD, YOLO) on high resolution images. It is often necessary to employ a high resolution image in object detection for precise detection of multiple, often small, objects.

An object detection method that is more suitable for use in a resource constrained system is desirable, particularly where the resource constraint is memory.

### Summary

According to a first aspect there is provided a computer implemented method of detecting one or more objects in an image, the method comprising:
processing a strip of the image, the strip comprising S lines of pixels of the image, with a backbone model to extract backbone features;
processing the backbone features with a neck model to enhance and/or fuse the backbone features and thereby produce neck features;
processing the neck features with a head model to detect one or more objects in the image;
wherein the step of processing a strip of the image is repeated until the whole image is processed.

The backbone model may be any suitable feature extraction model. The neck model may be a feature pyramid network/model. The neck features may comprise or consist of multiresolution features.

Detecting one or more objects in the image may comprise one or more of: determining a position of each object in the image, determining a size (e.g. HxW of a bounding box of each object in the image), determining a classification of each object in the image.

The method may further comprise performing the method without storing the whole image in a memory.

The backbone features may consist of at least one backbone feature line for each strip of the image, each backbone feature line having a first dimension corresponding with the number of features detected by the backbone model, and a second dimension corresponding with a dimension of the image divided by S.

S may be 2*ⁿ*, where *n* is an integer that is at least 1.

The neck model may iteratively process backbone feature lines to produce the neck features.

The neck model may comprise a recurrent model that retains information from a previous iteration.

The neck model may comprise a gated recurrent unit.

The neck model may comprise a channel projection block.

The neck model may output a neck feature line for each iteration.

The head model may comprise a convolution block with a receptive field that encompasses more than one iteration of neck feature lines.

According to a second aspect, there is provided a system comprising a processor having a memory, wherein the processor is configured to:
receive a strip of an image, the strip comprising S lines of pixels of the image;
process the strip of the image with a backbone model to extract backbone features;
process the backbone features with a neck model to enhance and/or fuse the backbone features and thereby produce neck features;
process the neck features with a head model to detect one or more objects in the image;
wherein the step of processing the strip of the image is repeated until the whole image is processed.

In certain embodiments, the memory is not large enough to store the whole image.

The backbone features may consist of a backbone feature line for each strip of the image, each backbone feature line having a first dimension corresponding with the number of features detected by the backbone model, and a second dimension corresponding with a dimension of the image divided by S.

S may be 2*ⁿ*, where *n* is an integer that is at least 1.

The neck model may iteratively processes backbone feature lines to produce the neck features.

The neck model may comprise:
i) a recurrent model that retains information from a previous iteration;
   and/or
ii) a channel projection block.

The neck model may output a neck feature line for each iteration.

The head model may comprise a convolution block with a receptive field that encompasses more than one iteration of neck feature lines.

The processor may be a microcontroller.

The system may further comprise a readout circuit for an imaging sensor, wherein the readout circuit is configured to read out a subset of the image from the imaging sensor and provide the subset of the image to the processor, the subset of the image comprising S, or fewer, lines of the image.

The features of each aspect may be combined with those of any other aspect. The methods described herein may use, or be implemented on, a system or processor as described herein. The system or processor described herein may be configured to implement and of the features of the methods described herein. Method steps described with reference to the system may be combined with the method of the first aspect. System features described with reference to the first aspect may be combined with the system of the second aspect.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic drawing of an example single-stage object detection architecture;
Figure 2 is an architecture for resource constrained object detection;
Figure 3 shows a backbone model;
Figure 4 shows a neck model;
Figure 5 shows a head model;
Figures 6 and 7 show object detection on an example image from the COCO dataset;
Figure 8 shows face detection on an example image from the WiderFace dataset;
Figure 9 is an example in which the methods described herein are applied to linear array sensor applications, such as an orbital push broom scanner; and
Figure 10 shows an example system, comprising a microcontroller and a camera.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### Detailed description of embodiments

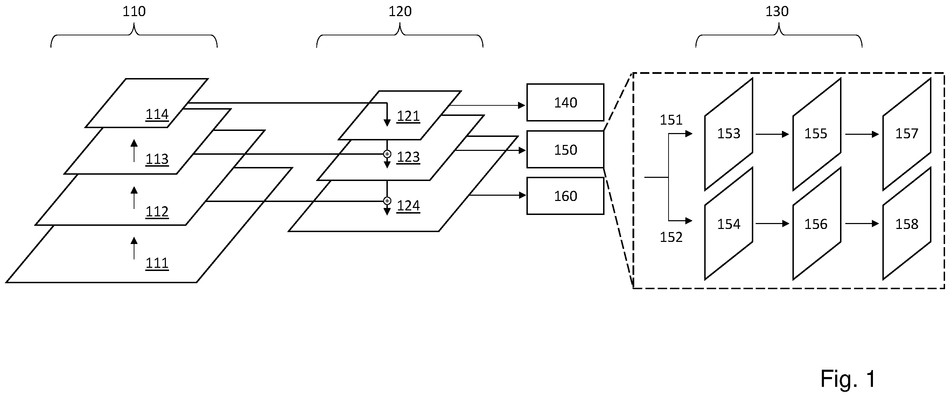

Figure 1 shows a prior art architecture for single stage object detection. The architecture comprises a backbone 110, neck 120 and head 130. In the backbone 110 there are a series of convolutional blocks 111, 112, 113, 114. The input to the first convolutional block 111 is the image within which objects are to be identified. At the end of each block 111, 112, 113, 114, the size of the output feature map (which may be considered a feature map) is reduced, for example using a convolution with a stride greater than 1, or with a pooling layer. At the same time, the depth of the feature map is typically increased (e.g. by employing an increasing number of filter kernels in successive blocks). With each successive block, the size of the feature map is reduced and an increasing amount of high-level features are created.

The following table describes this structure in the MobileNetV2 backbone:

**Table 1: Structure of MobileNetV2 convolution blocks and feature map sizes for a square 224x224 input image.**

| Block | Input size | Input Features | Stride w.r.t. input img |
|---|---|---|---|
| 1 | 224² | 3 | 1 |
| 2 | 112² | 32 | 2 |
| 3 | 112² | 16 | 2 |
| 4 | 56^{z} | 24 | 4 |
| 5 | 28² | 32 | 8 |
| 6 | 14² | 64 | 16 |
| 7 | 14² | 96 | 16 |
| 8 | 7² | 160 | 32 |
| 9 | 7² | 320 | 32 |
| Avg Pool | 7² | 1280 | 224 |

An effective stride (i.e. column 4 above) can be defined based on the size (e.g. row length) of the feature map and the size (e.g. row length) of the input image. For example wherein the feature map has rows that are half the length of the rows of the input image, the effective stride is 2. Where the feature map has rows that are 8 times shorter than the length of the rows of the input image, the stride is 8.

The neck 120 is a multi-resolution feature aggregator network, such as a Feature Pyramid Network (FPN). Convolution blocks 121, 123, 124 in the neck receive feature maps of different size from the backbone 110, and refine and fuse these features into a form that can be processed by the head 130.

The head 130 comprises classification and box subnets 140, 150, 160 that return class probabilities and box positions and sizes for each of the feature maps output by the neck 120. Each subnet 140, 150, 160 comprises a series of convolution blocks that are trained to classify and locate objects in the feature maps. Examples of object detection heads are SSD, YOLO and FCOS.

In some applications, it is desirable to perform object detection in an embedded system and/or using a microcontroller. Such systems are typically highly constrained in resources, particularly in memory. An example microcontroller is the NXP MCX-N947, which has 512kB RAM and an elQ^{©} Neutron NPU. Although the NPU is able to accelerate machine learning algorithms, the available memory is not sufficient to store a 640x480 VGA image: which is 900kB in RGB888 (i.e. 8bit quantisation for each of RGB).

In the prior art, a number of techniques have been proposed for performing object detection with constrained memory, including: quantisation, pruning and image size reduction. Quantisation reduces the bit depth of the quantisation in the input image, which may impair object detection where there is poor contrast between the object and the background. Pruning eliminates paths in the model that contribute less strongly to the end result, but this can increase error rates and may require re-training of the model. Image size reduction may impair small object detection and discrimination.

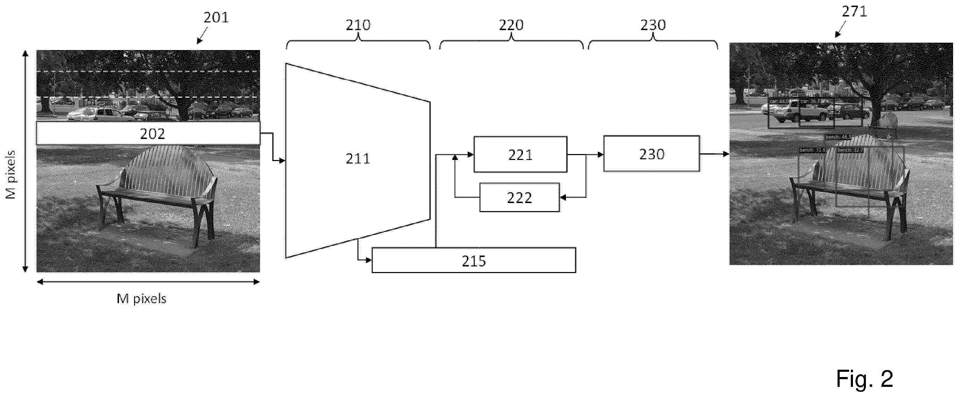

Figure 2 illustrates an architecture for object detection in images that is suitable for use in a resource constrained system (for example, one with a relatively small memory). In the approach of Figure 2, the whole image is never stored in memory. Instead the image is read out in pixel strips that can be accommodated in RAM, and the strips are iteratively parsed with a machine learning model to detect and classify objects in the image.

The image 201 comprises MxN pixels, where M is the number of rows and N is the number of columns (the pixels may be RGB pixels). The image 201 may be obtained from a camera focal plane array, which may be read-out (using a readout circuit) a line at a time (or a few lines at a time). A strip of S rows 202 of the image 201 that are obtained from the readout circuit are stored in RAM, and processed (for example using an NPU of a microcontroller).

A backbone model 210 receives a strip of S rows of the image, and extracts features using a convolutional neural network. The backbone 210 is an encoder, and comprises successive convolution blocks that reduce the size of the feature map, while increasing its depth. The output of the backbone 210 is a feature line 215, with a depth equal to the number of features and a length corresponding with M/S.

The neck model 220 iteratively processes the backbone feature lines 215 to determine neck features, which are passed to a detection head 230. The detection head 230 identifies objects in the neck features, which are shown in the output 271, which comprises bounding boxes associated with feature classifications.

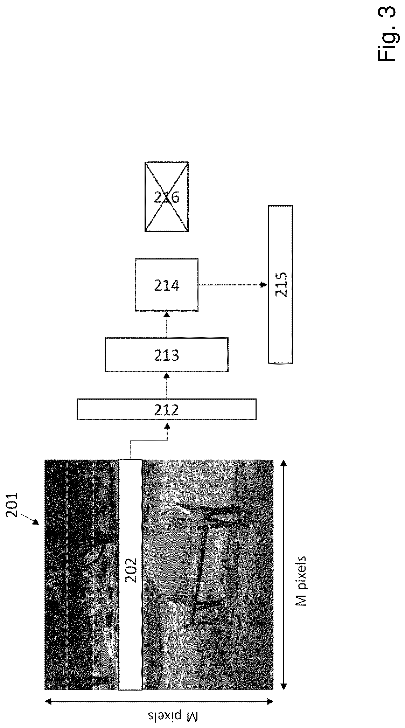

The backbone model 210 is more clearly shown in Figure 3, which shows the image 201, image strip of S rows 202, successive convolution blocks 212, 213, 214 and backbone feature line 215. The backbone feature line 215 comprises a single line of features, with depth equal to the number of features (in other examples there may be more than one feature line produced by each iteration of the backbone model). Iteratively applying the backbone model 210 to the image 201 will produce M/S backbone feature lines, with a number of features that depend on the backbone model.

In the specific case of MobileNetV2 and pixel strips of 16 pixel rows from a 224x224 image, a feature line of 96 features is obtained for each of the 14 pixel strips. The output from the backbone model 210 for each iteration of the backbone model 210 is a single one of these backbone feature lines (of dimension 96x1x14, or more generally Nfeatx1xM/S where Nfeat is the number of features extracted by the backbone model, M is the number of rows and S is the number of rows per strip. Referring to Table 1, it can be seen that, in the case of MobileNetV2, the output from block 6 comprises an effective stride of 16, matching the S value of 16 in this example, thereby producing a backbone feature line. Block 7 and subsequent blocks (indicated in Figure 3 by 216) are not needed. A part of a pre-trained backbone model can be used, such as MobileNetV2. Since only part of the pre-existing backbone model is used, there are substantial savings in computation.

Although this example has indicated a strip with S=16, this is not essential and other values of S can be used. It is convenient if S=2ⁿ since this makes it straightforward to form a backbone feature line.

Other backbone models can be used. Table 2 below compares memory required for features obtained from different backbone models, assuming that the input image is 224x224 and the strips have S=16.

**Table 2: Feature lines for different backbone models, with a 224x224 image and S=16**

| Architecture | Feature line shape | Mem. for feats (kB) |
|---|---|---|
| MobileNetV2 | 96 × 1 × 14 | 1.31 |
| EfficientNet-B0 | 112 × 1 × 14 | 1.53 |
| ResNet34 | 128 × 1 × 14 | 1.75 |
| DarkNet53 | 512 × 1 × 14 | 7 |

As mentioned above, the input image does not have to be square. Where the image is MxN and N is different to M, the backbone feature line dimensions may be: Nfeatx1xN/S. Padding or image re-sizing may be used to ensure that division N or M by S results in an integer value.

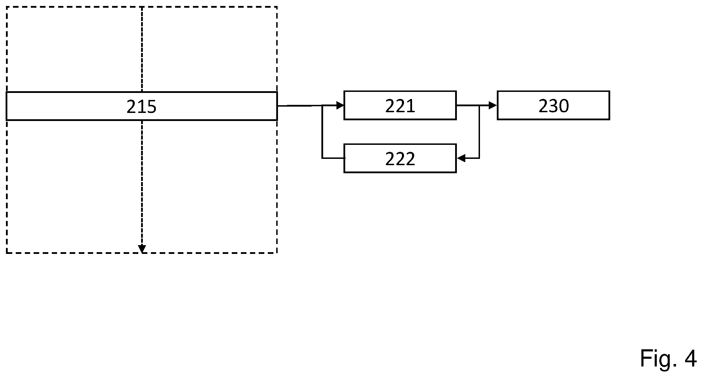

Referring to Figure 4, a neck model 220 comprising a 1D ConvGRU 221 and 1x1 convolution block 222 is illustrated in more detail. The neck model 220 iteratively processes backbone feature lines 215 (e.g. one at a time or a few at a time), to provide features suitable for the detection head 230. In a classical object detection architecture, such as FCOS, the neck is usually a multi-resolution feature aggregator network (as shown in Figure 1). In certain embodiments, backbone feature lines are extracted at a single resolution level, so there is no need for multi-resolution computing.

Instead, the neck model preferably remembers important features from one iteration of the neck model to the next in order to obtain coherent object detection results. Each iteration of the neck model may correspond with a single pixel strip, or a few pixel strips.

In the example of Figure 4, a 1D convolutional gated recurrent unit (GRU) 221 is used, which iteratively processes a single backbone feature line 215 per iteration. A 1x1 convolution block 222 is used to project the hidden states of the 1D ConvGRU 221 to match the dimensions of the backbone feature line 215 so that output of the 1D ConvGRU 221 can be combined with the backbone feature line 215.

The operation of a gated recurrent unit is described by: ${z}_{t} = {σ}_{z} \left({W}_{zx}∗{f}_{t}∗{W}_{zh}∗{h}_{t - 1}+{b}_{z}\right)$ ${r}_{t} = {σ}_{r} \left({W}_{rx}∗{f}_{t}∗{W}_{rh}∗{h}_{t - 1}+{b}_{r}\right)$ ${{h}^{˜}}_{t} = {σ}_{h} \left({W}_{{h}^{˜} x}∗{f}_{t}+{W}_{{h}^{˜} rh}∗\left({r}_{t}⊙{h}_{t - 1}\right)+{b}_{{h}^{˜}}\right)$ ${h}_{t} = \left(1-{z}_{t}\right) ⊙ {{h}^{˜}}_{t} + {z}_{t} ⊙ {h}_{t - 1}$ Where *zₜ* is the update gate, *rₜ* is the reset gate, *h̃ₜ* is the new candidate memory cell, *hₜ* is the hidden state, *σ* is the sigmoid activation, ⊙ is the Hadamard product, *fₜ* is the input feature vector and * is the 1D convolution operator.

The hidden state size of the 1D ConvGRU cell can differ from the original feature depth taken as input, and may be adjusted according to the difficulty of the task to be performed. For instance, face detection might be easier than other types of object detection on the MS-COCO test dataset. The projection block 221 accounts for that, and projects the hidden state *hₜ* back to *N_{feat}* output features to match the feature depth in the backbone feature line 215.

Although a single resolution backbone is described, a multi-resolution backbone can be accommodated by modifying the neck to have an FPN-like structure by using up-sampling layers or transposed convolutions.

In some embodiments a different approach than a ConvGRU may be used to retain information from a previous iteration of the neck model. Alternatives include: one or more ConvLSTM block (or lightweight ConvLSTM); echo state networks and liquid state machines, temporal convolutional networks (optionally with dilated convolutions).

If the objects to detect are relatively straightforward (e.g. faces), the ConvGRU may not be necessary, and the neck model can be replaced by a 1x1 convolution that uses the number of features in the backbone feature line in the input and the number of features to be received by the head model in the output.

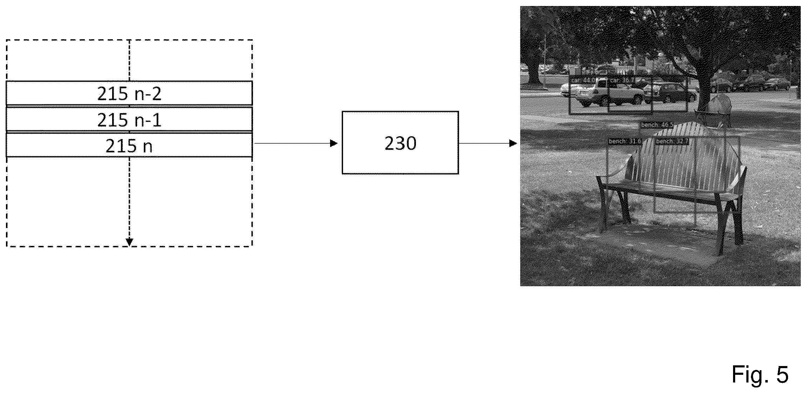

Referring to Figure 5, the operation of the detection head 230 is shown. Multiple detection heads have been developed (e.g. SSD, YOLO, FCOS) and most of them can be used in embodiments, particularly where they are convolutional.

The FCOS head was used in an example, since this has good performance with only a few convolutions per output branch (boxes, classes and centreness).

Since the FCOS head uses 2D convolutions with 3x3 kernels, 3 neck feature lines can be aggregated in a queue to avoid the need for padding, and then the head model can run on the aggregated neck feature lines. If the system memory allows, all the neck feature lines 215 can be aggregated (corresponding with the whole image), and the head model 230 run on all the neck feature lines. Example feature bounding boxes are shown in the output image in Figure 5.

In an example, experiments were run on the Microsoft COCO object detection dataset and the WilderFace face detection dataset. The example employed a backbone model comprising a portion of the MobileNetV2 convolutional backbone, and an FCOS detection head.

The example method was implemented using the MMDetection object detection framework, based on PyTorch, which already features implementations of existing feature extraction backbones, feature aggregation necks and object detection heads. This allows for easy training and comparisons with existing methods.

The example model was trained based on the MobileNetV2 backbone to convergence. A 224x224 input image size was used, and a hidden state of 128 features in the 1D ConvGRU neck. Accuracy was measured using the COCO mAPL metric, which only takes into account large objects.

**Table 3: Performance of the example object detection model (StripeDet-MNv2) on the COCO validation set compared with a prior art method**

| Architecture | COCO mAP*_{L}* |
|---|---|
| SSDLite-MobileNetV2 | 0.41 |
| StripeDet-MNv2 (Ours) | 0.15 |

While Table 3 shows that the method incurs an accuracy loss on the Microsoft COCO object detection dataset, tables 4 and 5 highlight the large memory gains in the storage of input images and backbone features yielded by the backbone model. The same can be said for the memory used during the inference of the backbone model, which will be reduced by a factor of *S*/*M,* i.e., the number of pixel strips in the image. The method makes "full resolution" inference possible on platforms such as the NXP MCX-N 947 which has a limited memory of 512kB but still features a Neural Processing Unit for accelerating convolution operations.

**Table 4: Memory usage of the 8-buit input image and 8-bit features for inference on a 224x224 image.**

| Architecture | Input img. mem. (kB) | Features mem. (kB) |
|---|---|---|
| SSDLite-MNv2 | 147 | 18 |
| **Ours** | **10.5** | **10** |

**Table 5: Memory usage of the 8-bit input image and 8-bit backbone features for inference on a VGA image of 640x480 pixels**

| Architecture | Input img. mem. (kB) | Features mem. (kB) |
|---|---|---|
| SSDLite-MNv2 | 900 | 600 |
| **Ours** | **30** | **20** |

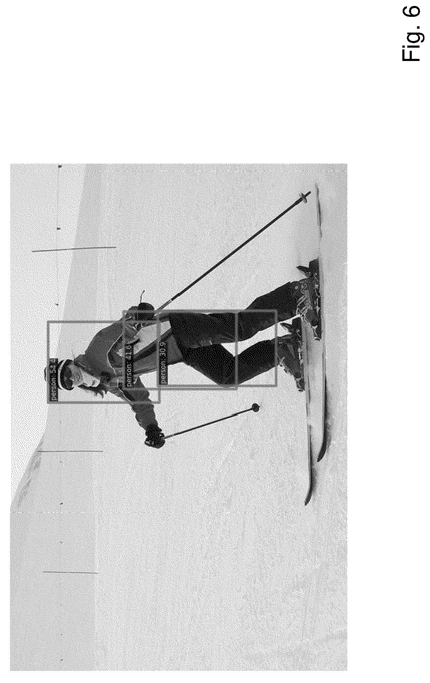

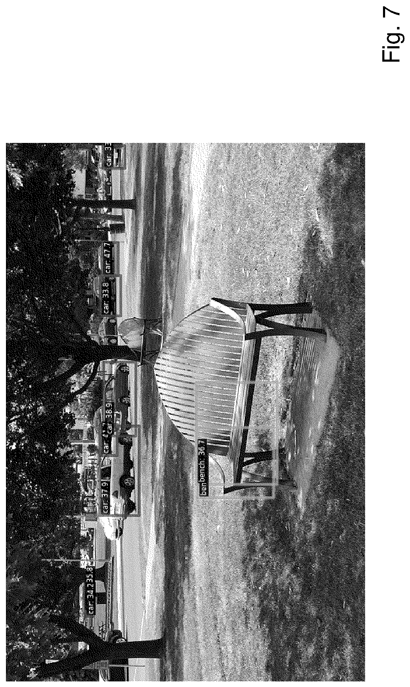

Qualitative results are shown in Figures 6 and 7. These qualitative results show that methods are capable of detecting various objects in images. While some detections are duplicated, it should be kept in mind that the system never actually saw the entirety of these images simultaneously and yet was still able to detect most objects at the cost of some accuracy drop, which is due to the restricted context. In particular, the system is able to detect the small cars in Figure 7, which would have been lost if the resolution of the input image was decreased to make inference possible.

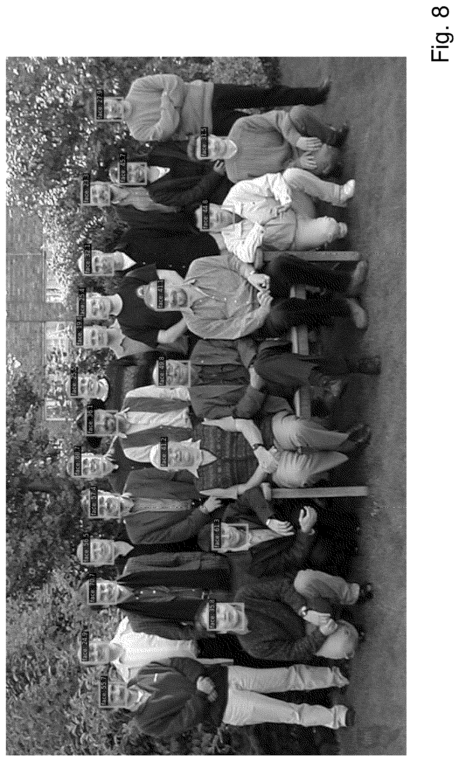

A further example, similar to that described above, was trained on face detection using the WiderFace dataset. In this case the image resolution was 320x240 and a mAP of 0.198 was reached. A variant was trained with a non-recurrent neck model (as discussed above), which reached a mAP of 0.1876. Figure 8 shows example results, in which faces are correctly identified.

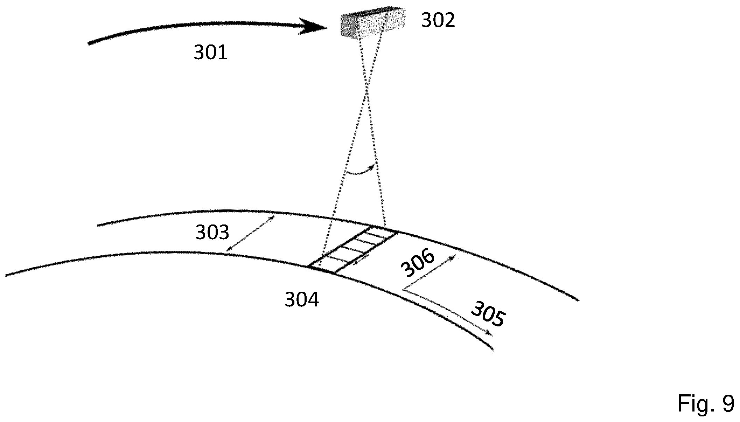

Figure 9 shows a system comprising an array sensor 302 (which may be carried on an aircraft or satellite). The array sensor 302 has a scan line 304 on the ground, covering a swath 303. The array sensor 302 scan line 304 moves relative to the ground in direction 305, along a track. Methods and systems described herein may be used to detect objects in the scan.

Methods and systems described herein are equally applicable to industrial applications such as conveyor systems, in which a moving conveyor passes through a field of view of an array detector (which may be a linear array sensor, or a 2D array sensor).

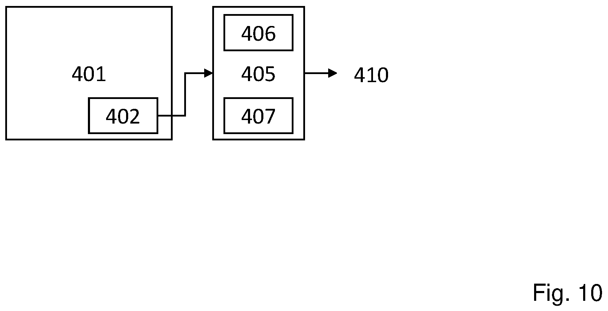

Figure 10 shows a system comprising an image sensor (or camera) 401 having a readout circuit 402 and a microcontroller 405 comprising a processor 406 and RAM memory 407. The image sensor 401 may, for example, have a resolution of at least VGA or QVGA. The microcontroller 405 may have a relatively small amount of RAM memory 407 (e.g. 640kB or less, or 1024kB or less). The system may be configured to perform the methods described herein.

For example, the readout circuit 402 is configured to read out a frame/image from the image sensor 401 line by line (for example, row by row), and transmit this information to the microcontroller 405. The microcontroller 405 stores one or more (e.g. 2*ⁿ*) lines in memory 407 as a strip of the image. The microcontroller 405 process the strip of the image with a backbone model using the processor 406, which may comprise a neural processing unit designed to accelerate machine learning operations. The resulting backbone feature line is processed by the processor 406 using a neck model to produce neck features. The neck features resulting from processing the current strip are be stored in the memory 407. The steps of processing each strip with the backbone and neck model is repeated to assemble sufficient neck features to process with a head model. Each time this is done, the previous iteration of backbone features may be overwritten.

In some cases, all the image strips are processed to obtain neck features before the head model is run on the assembled neck features. In other cases the head model may be run each time there are sufficient neck features (e.g. when there are three lines, or one line of neck features, depending on the architecture of the head model), and currently stored neck features subsequently overwritten with new neck features as the next iteration of neck model is run.

The methods described herein may be applied to any processor to reduce memory requirements for object detection, but may be particularly applicable to microcontrollers and embedded systems, which often have significant memory constraints.

The methods described herein may be configured to run in real time, within a frame time of a video stream (for example, at a rate of at least 15 FPS, 20 FPS, 25 FPS, 30 FPS, 45 FPS, 50 FPS, 60 FPS or faster).

Disclosed herein are methods and systems that aim to save on memory usage to perform object detection where it was not previously possible. Certain examples take advantage of the bottleneck structure of encoder based feature extractors and of the ability of recurrent neural networks to perform well in scenarios with long-term dependencies.

Many combinations of backbones, necks and heads can be used. Specific combinations may work particularly well in certain contexts (e.g. a pairing of hardware constraint and objects to be identified). Systems and methods described herein can be used in various tinyML scenarios such as low-power face detection and recognition. They can also be used with linear image sensors for object detection on conveyor belts, or aboard satellites equipped with pushbroom sensors for a wide array of applications.

From reading the present disclosure, other variations and modifications will be apparent to the skilled person. Such variations and modifications may involve equivalent and other features which are already known in the art of automated speech recognition systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer implemented method of detecting one or more objects in an image, the method comprising:
processing a strip of the image, the strip comprising S lines of pixels of the image, with a backbone model to extract backbone features;
processing the backbone features with a neck model to enhance and/or fuse the backbone features and thereby produce neck features;
processing the neck features with a head model to detect one or more objects in the image;
wherein the step of processing a strip of the image is repeated until the whole image is processed.

2. The method of claim 1, further comprising performing the method without storing the whole image in a memory.

3. The method of claim 1, wherein the backbone features consist of at least one backbone feature line for each strip of the image, each backbone feature line having a first dimension corresponding with the number of features detected by the backbone model, and a second dimension corresponding with a dimension of the image divided by S.

4. The method of claim 3, wherein S is 2*ⁿ*, where n is an integer that is at least 1.

5. The method of claim 3, wherein the neck model iteratively processes backbone feature lines to produce the neck features.

6. The method of claim 5, wherein the neck model comprises a recurrent model that retains information from a previous iteration.

7. The method of claim 6, wherein the neck model comprises a gated recurrent unit.

8. The method of claim 1, wherein the neck model comprises a channel projection block.

9. The method of claim 5, wherein the neck model outputs a neck feature line for each iteration.

10. The method of claim 5, wherein the head model comprises a convolution block with a receptive field that encompasses more than one iteration of neck feature lines.

11. A system comprising a processor having a memory, wherein the processor is configured to:
receive a strip of an image, the strip comprising S lines of pixels of the image;
process the strip of the image with a backbone model to extract backbone features;
process the backbone features with a neck model to enhance and/or fuse the backbone features and thereby produce neck features;
process the neck features with a head model to detect one or more objects in the image;
wherein the step of processing the strip of the image is repeated until the whole image is processed.

12. The system of claim 11, wherein the memory is not large enough to store the whole image.

13. The system of claim 11, wherein the backbone features consist of at least one backbone feature line for each strip of the image, each backbone feature line having a first dimension corresponding with the number of features detected by the backbone model, and a second dimension corresponding with a dimension of the image divided by S.

14. The system of claim 13, wherein S is 2*ⁿ*, where *n* is an integer that is at least 1.

15. The system of claim 13, wherein the neck model iteratively processes backbone feature lines to produce the neck features.

16. The system of claim 15, wherein the neck model comprises:
i) a recurrent model that retains information from a previous iteration; and/or
ii) a channel projection block.

17. The system of claim 15, wherein the neck model outputs a neck feature line for each iteration.

18. The system of claim 15, wherein the head model comprises a convolution block with a receptive field that encompasses more than one iteration of neck feature lines.

19. The system of claim 11, wherein the processor is a microcontroller.

20. The system of claim 11, further comprising a readout circuit for an imaging sensor, wherein the readout circuit is configured to read out a subset of the image from the imaging sensor and provide the subset of the image to the processor, the subset of the image comprising S, or fewer, lines of the image.
